# FASCICULE DE BREVET EUROPEEN

(11) **EP 4 436 871 B1**
(45) Date de publication et mention de la délivrance du brevet: **18.02.2026**
(21) Numéro de dépôt: 22817994.1
(22) Date de dépôt: 15.11.2022
(51) Int. Cl.: B63H 9/10, B63H 9/072

(54) **SYSTEME DE TRACTION A AILE CAPTIVE MUNI D´UN SOCLE A ESPACE INTERNE DE STOCKAGE**
ZUGSYSTEM MIT EINEM WINDZUGFLÜGEL AUSGESTATTET MIT EINER GRUNDPLATTE MIT INTERNEN LAGERRAUM
TRACTION SYSTEM WITH CAPTIVE WING, HAVING A BASE WITH INTERNAL STORAGE SPACE

(30) Priorité: 24.11.2021 FR 2112464
(43) Date de publication de la demande: 02.10.2024
(73) Titulaire: Kawasaki Kisen Kaisha Ltd, Tokyo 100-8540 (JP)
(72) Inventeur: LAMAT, Eric, 31280 MONS (FR); HAUDEBAULT, Jean - Luc, 79260 FRANCOIS (FR); WIEL, Georges, 44100 NANTES (FR); RETHO, Rémi, 44000 NANTES (FR)
(74) Mandataire: Junca, Eric
(86) Numéro de dépôt international: PCT/EP2022/082025
(87) Numéro de publication internationale: WO 2023/094224

(56) Documents cités:
- FR-A1- 3 082 185

## Description

### DOMAINE TECHNIQUE

L'invention concerne le domaine des systèmes de traction à aile captive qui sont adaptés à déployer et replier une aile de traction par rapport à une plateforme de base, cette aile de traction étant adaptée à générer une force de traction sous l'effet du vent.

De tels systèmes de traction permettent le déploiement d'une aile de traction volante servant à la propulsion d'un véhicule, notamment un navire (en tant que mode de propulsion principal, ou à titre d'assistance), pour la production d'électricité, ou pour toute application tirant profit d'une telle force de traction.

### ART ANTÉRIEUR

La demande de brevet français FR3082184 décrit un système de traction à aile captive et un procédé de déploiement et de repli de l'aile de traction. Le système comporte une structure de déploiement et de repli de l'aile de traction.

Il existe des moyens d'orienter l'aile de traction par rapport au vent apparent. Ces moyens imposent généralement de dérouter temporairement le navire, ou nécessitent des dispositifs complexes et mobiles au sein de la structure de déploiement et de repli.

Les procédés de déploiement et de repli de l'art antérieur comportent généralement au moins un certain nombre d'étapes manuelles nécessitant l'intervention d'opérateurs à proximité de la structure de déploiement et de repli.

La demande de brevet français FR3082185 décrit un autre système de traction à ailes reliées à poste fixe, ce poste fixe incluant un mât équipé de moyens dédiés à l'accostage des ailes.

### EXPOSÉ DE L'INVENTION

L'invention a pour but d'améliorer les systèmes de traction à aile captive de l'art antérieur, ainsi que les procédés de déploiement, de repli, et de stockage associés.

À cet effet, l'invention vise un système de traction à aile captive, comportant :
- une aile de traction adaptée à générer une force de traction sous l'effet du vent ;
- un dispositif volant de commande de trajectoire rattaché à l'aile de traction par des lignes de suspente ;
- une plateforme de base sur laquelle est montée une structure de déploiement et de repli de l'aile de traction ;
- une ligne de traction reliant le dispositif volant de commande de trajectoire à la plateforme de base.

De plus :
- le système comporte un socle qui comprend une embase de fixation sur un support de traction, ce socle comprenant de plus un espace interne de stockage pour l'aile de traction ;
- la plateforme de base est montée rotative sur le socle selon une liaison pivot ;
- la plateforme de base comporte une fenêtre de stockage débouchant dans l'espace interne de stockage, cette fenêtre de stockage étant située au pied de la structure de déploiement et de repli.

Selon un autre objet, l'invention vise un procédé de déploiement ou de repli d'une aile de traction d'un système de traction tel que décrit ci-dessus. Ce procédé comporte une étape de rotation de la plateforme de base sur le socle, pour orienter le dispositif de déploiement ou de repli par rapport au vent.

Ce procédé peut comporter en outre les étapes suivantes :
- les charriots saisissent l'aile de traction par ses lignes de suspente ;
- les charriots descendent le long de la structure de déploiement et de repli jusque dans l'espace interne de stockage.

Le support de traction désigne ici un élément sur lequel une force de traction est exercée pour le déplacer, ou un élément de référence sur lequel est ancré le système de traction. Par exemple, dans le cas où le système de traction est destiné à la production d'énergie, en particulier d'électricité, le support de traction peut être le sol. Dans le cas où le système de traction est destiné à la propulsion d'un véhicule, le support de traction est le véhicule lui-même.

Un tel système de traction à aile captive est compatible avec une automatisation totale et sécurisée du déploiement et du repli de l'aile de traction. Ces opérations peuvent alors être pilotées depuis un poste de commande déporté, sans nécessiter d'intervention humaine sur le système de traction, ni pour orienter l'aile de traction, ni pour manipuler les différents cordages de l'aile, ni pour aider au pliage ou au stockage de l'aile de traction.

Une orientation de l'aile de traction (par exemple pour présenter son bord d'attaque face au vent apparent) peut être réalisée automatiquement. L'invention permet de réaliser cette orientation par une simple liaison pivot, qui est plus fiable et d'un cout moindre que d'autres dispositifs complexes d'orientation de la structure de déploiement et de repli de l'aile de traction.

De préférence, l'ensemble des éléments destinés à la manipulation de l'aile de traction sont montés sur la plateforme de base, tels que, par exemple, treuils de ligne de traction, supports pour les éléments de l'aile de traction, etc. L'ensemble de ces éléments montés sur la plateforme de base est entrainé en rotation conjointement avec la structure de déploiement et de repli de sorte qu'aucune liaison mécanique complexe n'est à prévoir entre ces différents éléments, présents sur un même référentiel physique.

L'orientation angulaire de la structure de déploiement et de repli, qui permet d'ajuster le positionnement de l'aile de traction par rapport au vent, est donc réalisée de manière indépendante par rapport au support de traction.

Dans le cas du montage de l'aile de traction sur un véhicule tel qu'un navire, il n'est pas nécessaire, comme dans certaines réalisations de l'art antérieur, d'orienter le navire lui-même selon une allure procurant l'orientation voulue pour l'aile de traction, ce qui implique de dérouter le navire lors des phases de déploiement et de repli. La possibilité d'orienter l'ensemble du matériel présent sur la plateforme de base, y compris la structure de déploiement et de repli et l'aile de traction, sans modification de la route du navire, est particulièrement avantageuse dans le cas de navires imposants et peu manœuvrants, tels que des porte-containers ou des pétroliers. Cette possibilité d'orientation offre de plus des opportunités de combinaison avec la route du navire pour faire varier l'intensité du vent apparent (par exemple en sommant la vitesse du navire à celle du vent réel).

Le socle permet l'orientation angulaire de la plateforme de base et de la structure de déploiement et de repli. Ce socle permet de plus, de préférence, de placer la plateforme de base à une hauteur suffisante pour que la structure de déploiement et de repli soit en dehors de l'influence d'éléments de perturbation extérieurs. Par exemple, dans le cas du montage du système de traction sur un navire, le socle procure de plus une surélévation permettant une moindre exposition aux paquets de mer des éléments présents sur la plateforme de base, c'est-à-dire une moindre exposition aux importantes masses d'eau qui viennent heurter le pont d'un navire dans certaines conditions météo difficiles.

De plus, la plateforme de base ne comporte sur sa surface aucun élément de stockage de l'aile de traction, ces éléments étant les plus citriques en cas d'exposition aux paquets de mer, car ces éléments de stockage présenteraient d'importantes surfaces planes recevant ainsi des pressions conséquentes dans de telles conditions météo. Le stockage de l'aile de traction se fait à l'abri dans le socle proche du pont du navire, et dont la forme est de préférence choisie pour présenter une faible résistance (forme cylindrique, par exemple).

La surélévation procurée par le socle permet de plus de mettre l'aile de traction elle-même en dehors des zones de turbulence fluidiques provoquées par la présence d'éléments du navire perturbant le vent (superstructures du navire, containers et chargements divers, etc.). L'aile de traction bénéficie ainsi, lors de ces phases de déploiement et de repli d'un écoulement de vent peu perturbé, plus proche d'un écoulement laminaire. Un tel régime de vent peu perturbé est avantageux pour mettre en œuvre des procédés de manœuvre ou de pliage entièrement automatisés, et pour mettre en œuvre certains procédés avancés tels qu'un pliage en manche à air, favorisant le déploiement de l'aile de traction.

Le socle permet par ailleurs de réduire l'empreinte au sol d'un système de traction à aile captive, en choisissant une section de socle inférieure aux dimensions de la plateforme de base.

Le socle intègre un stockage de l'aile de traction dans sa fondation structurelle. L'aile de traction n'est ainsi plus stockée dans des éléments extérieurs à la plateforme de base (ou posés sur la plateforme de base) ce qui, en plus des fonctions de protection évoquées précédemment, permet de faciliter le rangement entièrement automatisé de l'aile de traction.

La fenêtre de stockage débouchant dans l'espace interne de stockage se trouve au pied de la structure de déploiement et de repli, de sorte que l'aile puisse être manipulée par des éléments mobiles simples (charriots coulissants sur des rails, par exemple) et directement déposée dans son espace de stockage en suivant une trajectoire simple et directe.

Le système de traction selon l'invention peut comporter les caractéristiques additionnelles suivantes, seules ou en combinaison :
- la plateforme de base comporte un support pour le dispositif volant de commande de trajectoire, ce support étant disposé à la périphérie de la fenêtre de stockage ;
- le système comporte un treuil adapté à enrouler ou relâcher la ligne de traction, ce treuil étant monté sur la plateforme de base ;
- le système comporte un goulot de stockage formé d'une portion de cylindre donnant accès à la fenêtre de stockage, ce cylindre étant fixé sur la plateforme de base ;
- le système comporte un entonnoir de guidage en direction de la fenêtre de stockage, pour le repli de l'aile de traction ;
- l'entonnoir de guidage comporte un bec de guidage pour le guidage des lignes de suspente de l'aile de traction ;
- le goulot de stockage comporte une échancrure de passage des lignes de suspente de l'aile de traction ;
- le système comporte un couvercle de fermeture du goulot de stockage ;
- la structure de déploiement et de repli traverse la fenêtre de stockage ;
- le couvercle comporte une entaille de passage de la structure de déploiement et de repli ;
- le système comporte un réceptacle à voile qui est rattaché à la plateforme de base et qui est disposé dans l'espace interne de stockage ;
- le réceptacle à voile comporte une ouverture supérieure fixée par son pourtour sur les parois internes du goulot de stockage ;
- le système comporte des moyens d'entrainement en rotation d'une partie inférieure du réceptacle à voile ;
- le réceptacle à voile comporte une ouverture latérale d'accès à la structure de déploiement et de repli ;
- le système comporte un dispositif de motorisation de la rotation de la plateforme de base sur le socle, ce dispositif comportant une couronne dentée sur laquelle engrène au moins un pignon ;
- le système comporte des patins de rétention de la plateforme de base contre le socle ;
- le système comporte un jambage de maintien reliant la structure de déploiement et de repli à la plateforme de base, par-dessus la fenêtre de stockage ;
- l'entonnoir de guidage est formé d'au moins une barrière rattachée au jambage de maintien ;
- la structure de déploiement et de repli comporte un mât d'arrimage fixé sur la plateforme de base et adapté à arrimer l'aile de traction par son bord d'attaque ;
- la structure de déploiement et de repli comporte des charriots de manipulation des lignes de suspente, ces charriots étant adaptés à coulisser le long du mât d'arrimage jusque dans l'espace interne de stockage.

### PRÉSENTATION DES FIGURES

D'autres caractéristiques et avantages de l'invention ressortiront de la description non limitative qui suit, en référence aux dessins annexés dans lesquels :
- la figure 1 illustre un système de traction selon l'invention, l'aile de traction étant en vol ;
- la figure 2 illustre le système de traction de la figure 1, l'aile de traction étant en cours de déploiement ou en cours de repli ;
- la figure 3 représente la plateforme de base et la structure de déploiement et de repli du système de traction selon l'invention ;
- la figure 4 est une vue schématique en coupe du système de traction selon l'invention ;
- la figure 5 illustre la plateforme de base du système de traction selon l'invention ;
- la figure 6 représente une portion du système de traction selon l'invention, vue de dessus ;
- la figure 7 représente le réceptacle à voile du système de traction selon l'invention ;
- la figure 8 représente la portion du système de traction illustrée à la figure 6, vue de dessous ;
- la figure 9 est une vue de détail du système de traction selon l'invention ;
- la figure 10 représente la plateforme de base du système de traction selon l'invention, vue de dessous en perspective ;
- la figure 11 représente la plateforme de base du système de traction selon l'invention, vue de dessous ;
- la figure 12 illustre la plateforme de base du système de traction selon l'invention un demi couvercle étant ouvert ;
- la figure 13 illustre la plateforme de base du système de traction selon l'invention un autre demi couvercle étant ouvert ;
- la figure 14 est une vue schématique en coupe du système de traction selon l'invention, illustrant le procédé de déploiement ou de repli.

### DESCRIPTION DÉTAILLÉE

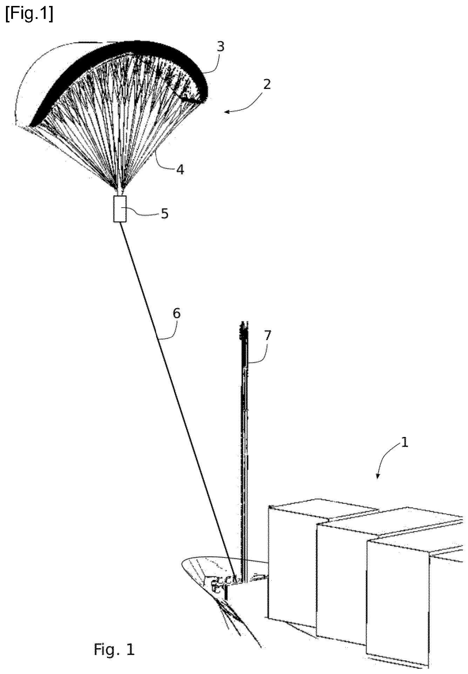

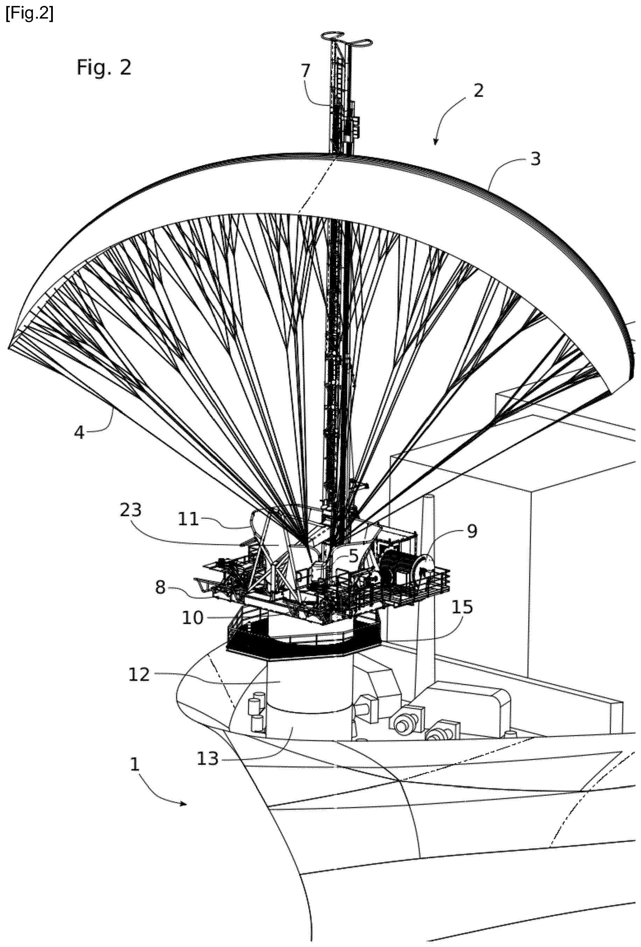

Les figures 1 et 2 illustrent un système de traction à aile captive monté sur un navire 1 qui est, dans cet exemple, un navire de fret maritime (sur ces figures, seul l'avant du navire a été représenté).

Dans le présent exemple, le système de traction est monté à la proue du navire 1 et est actionné comme un moyen complémentaire de propulsion du navire permettant une économie de carburant. Dans ce contexte, le système de traction est dimensionné selon le tonnage du navire à tracter et est prévu pour être déployé et replié de manière automatique.

En variante, ce système de traction peut être utilisé pour toute autre application où un tel système de traction déployable et repliable automatiquement est souhaité, par exemple comme moyen principal de propulsion d'un navire, pour la propulsion de tout autre véhicule, pour la production d'électricité, etc.

Le système de traction comporte une aile de traction 2 qui est adaptée à générer une force de traction sous l'effet du vent. Dans le présent exemple, l'aile de traction 2 est une voile de type parapente. Tout autre équipement volant adapté à générer une force de traction sous l'effet du vent peut alternativement être employé, tels que cerfs-volants, équipements de vol à voile, voiles de type « kite » (en anglais), etc. L'aile de traction 2 comporte, de manière classique, un bord d'attaque 3 destiné à être exposé au vent incident.

L'aile de traction 2 est reliée par un ensemble de lignes de suspente 4 à un dispositif volant de commande de trajectoire 5 qui est adapté à agir sur les lignes de suspentes 4 pour piloter le vol de l'aile de traction 2.

Sur la figure 1, le système de traction est dans une configuration de traction, l'aile de traction 2 étant déployée et en vol, et le système participant à la propulsion du navire 1. La figure 2 illustre ce même système de traction pendant une phase de déploiement ou de repli.

Le système de traction comporte de plus une ligne de traction 6 permettant d'exercer la force de traction sur le navire pour sa propulsion. La ligne de traction est dimensionnée en conséquence. Dans le cadre de la traction d'un navire de fret maritime, la ligne de traction peut être par exemple un câble textile dont le diamètre peut atteindre plusieurs centimètres.

Le dispositif volant de commande de trajectoire 5 permet de piloter le vol de l'aile de traction 2 afin d'orienter et de positionner l'aile de traction et éventuellement d'entrainer l'aile de traction 2 à décrire des figures de vol permettant d'augmenter la force de traction sur le navire. Le contrôle de la trajectoire de l'aile de traction 2 est ici obtenu en commandant la longueur de certaines lignes de suspente mobiles, de manière classique dans le domaine des ailes volantes.

Par exemple, l'ensemble des lignes de suspente 4 comporte des lignes de suspente fixes (c'est-à-dire qui présentent une longueur fixe entre leur rattachement à l'aile de traction 2 et leur rattachement au dispositif volant de commande de trajectoire 5), et des lignes de suspente mobiles dont la longueur est variable. Le dispositif volant de commande de trajectoire 5 est adapté à tirer sur certaines lignes de suspente mobiles et/ou à relâcher d'autres lignes de suspente mobiles, de sorte que le profil aérodynamique de l'aile de traction 2 est modifié en vue de contrôler sa portance, sa trajectoire, etc. La modification du profil d'une aile de traction pour la commande de sa trajectoire est réalisée de manière classique et ne sera pas décrite plus en détail ici.

Le système de traction comporte de plus une structure de déploiement et de repli de l'aile de traction. Cette structure comporte, dans le présent exemple, un mât d'arrimage 7 s'étendant verticalement. Le mât d'arrimage 7 permet de saisir, de maintenir, et d'orienter l'aile de traction 2 lors des phases de déploiement et de repli. La figure 2 donne un exemple d'une de ces phases, dans lequel l'aile de traction 2 est gonflée par le vent, tout en étant maintenue par son bord d'attaque contre le mât d'arrimage 7. Cette position est préalable à l'envol de l'aile (lors des phases de déploiement), ou au contraire est préalable au pliage de l'aile (lors des phases de repli). Le mât d'arrimage 7 peut comporter des charriots munis de crochets et déplaçables en translation le long du mât d'arrimage 7, de sorte à pouvoir saisir les lignes de suspente 4 de l'aile de traction et permettre la mise en œuvre de tout procédé de déploiement et de repli approprié. Les lignes de suspente 4 peuvent avoir des fonctions de lignes d'arrimage, de ferlage ou de pliage, par exemple.

En variante, toute autre structure de déploiement et de repli permettant de saisir des lignes de l'aile de traction et de manipuler ces lignes, de préférence de manière automatique, peut être prévue. De même, d'autres moyens d'accrochage que des charriots peuvent être prévus.

Le système de traction comporte de plus une plateforme de base 8 à laquelle est rattachée l'aile de traction 2 grâce à la ligne de traction 6. Un treuil 9 est monté sur la plateforme de base 8. La ligne de traction 6 est reliée à la plateforme de base 8 par l'intermédiaire de ce treuil 9 qui est commandé par un moteur, par exemple électrique ou hydraulique.

Le treuil 9 est adapté à dérouler la ligne de traction 6 pour permettre à l'aile de traction 2 de prendre de l'altitude, ou au contraire d'enrouler cette ligne de traction 6 pour ramener l'aile de traction 2 vers la plateforme de base 8.

La plateforme de base 8 comporte de plus un support 10 pour le dispositif volant de commande de trajectoire 5, destiné à recevoir ce dispositif durant les phases de déploiement, de repli, et de stockage.

La plateforme de base 8 comporte de plus un entonnoir de guidage 11 adapté à guider sans dommages l'aile de traction 2 vers son espace de stockage lors des phases de repli.

La plateforme de base 8 est une infrastructure fonctionnelle supportant les éléments de maniement de l'aile de traction 2 (tels que le treuil 9, l'entonnoir de guidage 11, et le support 10) et peut comporter de plus des planchers et passerelles permettant l'accès à ces équipements, notamment pour des questions de maintenance et de contrôle. Les garde-corps correspondants, et tout autre élément de sécurité, sont également montés sur la plateforme de base 8.

Le système de traction comporte de plus un socle 12 sur lequel est montée la plateforme de base 8. Le socle 12 est constitué, dans le présent exemple, d'un fût cylindrique comportant une embase de fixation 13 qui permet de fixer le socle 12 (et donc l'ensemble du système de traction) sur son support de traction. Dans le présent exemple, le support de traction est le navire 1 sur lequel le système de traction va agir. Dans d'autres exemples, par exemple lorsque le système de traction est destiné à la production d'électricité, le support de traction peut être un élément fixe relié au sol.

L'embase de fixation 13 est donc l'élément final par lequel la force de traction de l'aile de traction 2 est transmise au navire. Cette embase de fixation 13 est par exemple soudée ou boulonnée sur le pont du navire 1.

Dans le présent exemple, le système de traction présente une largeur hors-tout d'environ 15 mètres (cette dimension correspondant à la largeur maximale de la plateforme de base 8), tandis que le diamètre du socle 12 est d'environ 5 mètres. L'empreinte au sol du système est ici réduite de deux tiers grâce au socle 12.

La plateforme de base 8 est montée rotative sur le socle 12 selon une liaison pivot. Dans le présent exemple, l'axe 14 de pivot est perpendiculaire à la plateforme de base 8. Le mât d'arrimage 7 s'étend par ailleurs selon un axe qui est parallèle à cet axe de rotation de la plateforme de base 8.

La rotation de la plateforme de base 8 sur son socle 12 entraine ainsi la rotation du mât d'arrimage 7 (ou de toute autre structure de déploiement ou de repli montée sur la plateforme de base 8). Durant les phases de déploiement ou de repli (telles qu'illustrées à la figure 2) l'aile de traction 2 peut être maintenue contre le mât d'arrimage 7 par son bord d'attaque 3. La rotation de la plateforme de base 8 permet alors d'orienter conjointement l'aile de traction 2, le mât d'arrimage 7, et l'ensemble des éléments de manipulation de l'aile (treuil 9, support 10, entonnoir de guidage 11, etc.) pour orienter l'aile de traction 2 dans la position angulaire souhaitée par rapport au vent apparent. Notamment, le bord d'attaque 3 de l'aile de traction 2 peut ainsi être orienté face au vent apparent.

Le socle 12 comporte ici de plus une passerelle de visite 15 permettant la circulation de personnel autour du fût constituant le socle 12 et sous la plateforme de base 8 pour permettre des opérations de maintenance et d'observation. La passerelle de visite 15 est avantageusement circulaire et permet d'accéder au système quel que soit la position angulaire de la plateforme de base 8, grâce à une échelle d'accès à la plateforme de base 8, qui peut rejoindre la passerelle de visite 15 sur toute l'amplitude angulaire possible.

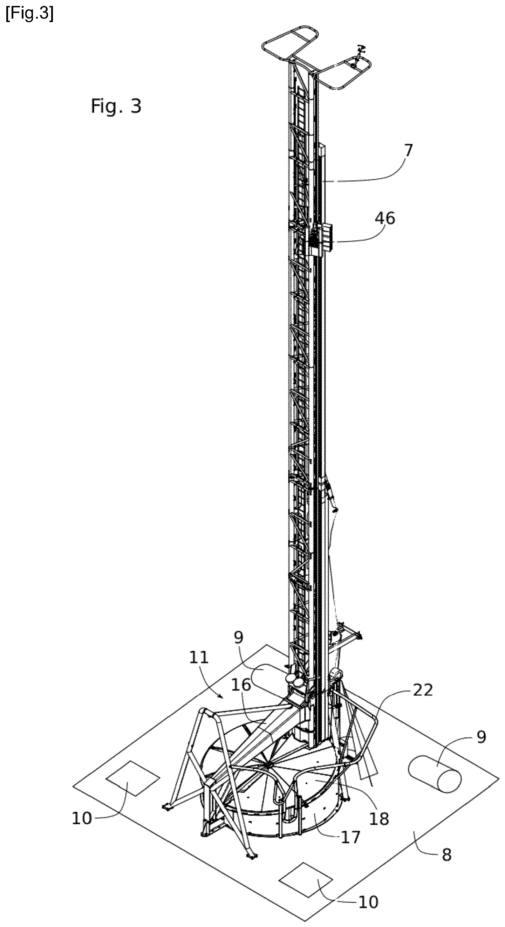

La figure 3 est une vue en perspective montrant la structure de déploiement et de repli ainsi que la plateforme de base 8 du système de traction.

Dans le présent exemple, le système de traction est un système à double aile de traction. Il est prévu pour envoyer, simultanément ou alternativement, deux ailes de traction 2 avec le même mât d'arrimage 7.

Le mât d'arrimage 7 comporte ainsi autant d'éléments de manipulation de l'aile de traction (rails, éléments de guidage, etc.) que nécessaire, ces éléments étant disposés symétriquement pour servir indépendamment à chacune des deux ailes de traction manipulées. Sur la figure 3, des charriots 46, coulissants le long du mât d'arrimage 7, illustrent de tels éléments de guidage de l'aile de traction 2.

Le double système de traction comporte, de manière symétrique, deux treuils 9, enroulant et déroulant chacun la ligne de traction 6 de chaque aile de traction, ainsi que deux supports 10 pour le dispositif volant de commande de trajectoire 5 de chaque aile de traction 2.

Le mât d'arrimage 7 est mécaniquement fixé sur la plateforme de base 8 et comporte de plus un jambage de maintien 16 qui enjambe un goulot de stockage 17 situé au pied du mât d'arrimage 7.

Le goulot de stockage 17 est fixé sur la plateforme de base 8, et est constitué ici d'une paroi cylindrique comportant un couvercle 18. Le goulot de stockage 17, lorsque le couvercle 18 est ouvert, donne accès à un espace interne de stockage prévu dans le socle 12.

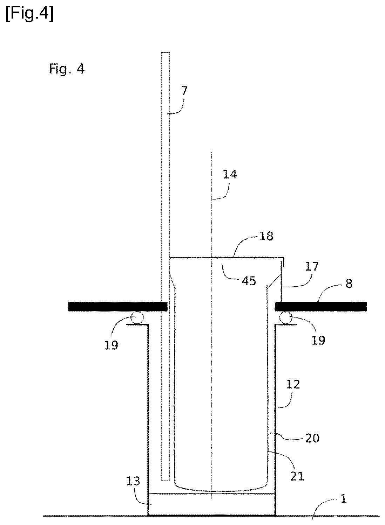

La figure 4 est une vue en coupe fonctionnelle des éléments de la figure 3.

Le socle 12 est fixé sur le pont du navire 1 par son embase de fixation 13 et est relié, par son extrémité supérieure, à la plateforme de base 8. En variante, cependant, l'embase de fixation 13 peut être simplement constituée par le fond du socle 12.

La liaison pivot entre la plateforme de base 8 et le socle 12 est schématisée par les billes 19 et l'axe 14 de rotation de plateforme de base 8 par rapport au socle 12 est représenté en traits d'axe.

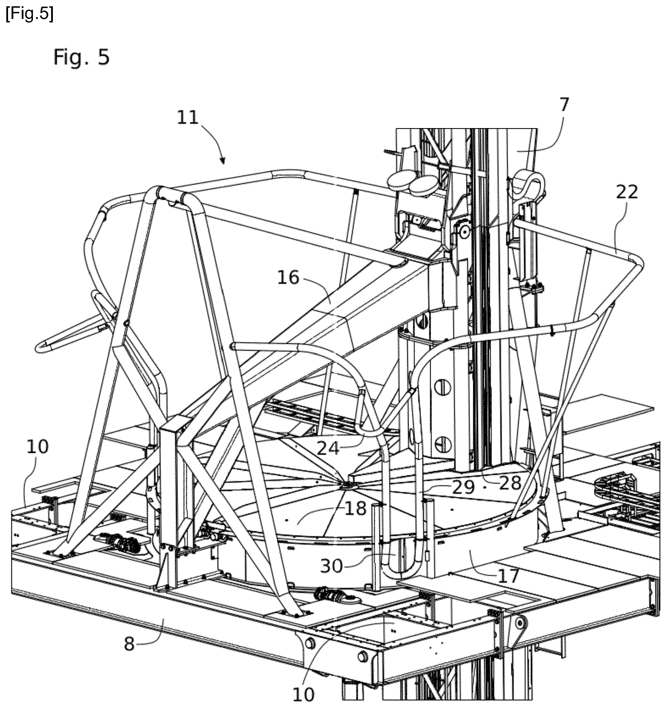

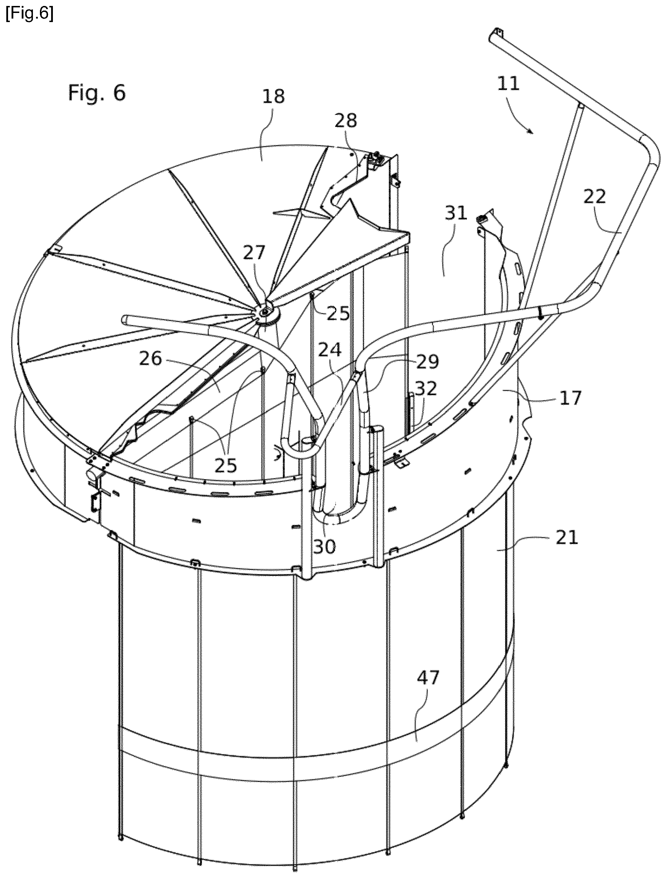

La plateforme de base 8 comporte une fenêtre de stockage circulaire 45 qui débouche dans un espace interne de stockage 20. La fenêtre de stockage 45 est située au pied du mât d'arrimage 7. L'entonnoir de guidage 11 (voir figures 5 et 6) forme un entonnoir en direction de la fenêtre de stockage 45.

Le support 10 du dispositif volant de commande de trajectoire 5 est disposé sur la plateforme de base 8, sur la périphérie de la fenêtre de stockage 45.

La liaison pivot entre la plateforme de base 8 et le socle 12 peut être réalisée par tout élément permettant de rendre rotatif la plateforme de base 8 sur le socle 12, tels que roulements à billes, pistes de glissement, etc.

Le mât d'arrimage 7 est fixé sur la plateforme de base 8, de même que le goulot de stockage 17 avec son couvercle 18. Le mât d'arrimage 7 traverse la fenêtre de stockage 45 et s'étend aussi bien au-dessus que en dessous de la plateforme 8.

Le socle 12 est creux et délimite un espace interne de stockage 20 destiné au stockage de l'aile de traction 2 et à sa protection, lorsque cette dernière n'est pas utilisée. La fenêtre de stockage 45 donne accès à cet espace interne de stockage 20.

Le socle 12 présente de plus une hauteur (par exemple de l'ordre de 6 mètres) permettant de mettre la structure de déploiement et de repli en dehors des zones où l'écoulement du vent est perturbé par les éléments de chargement ou de structure du navire.

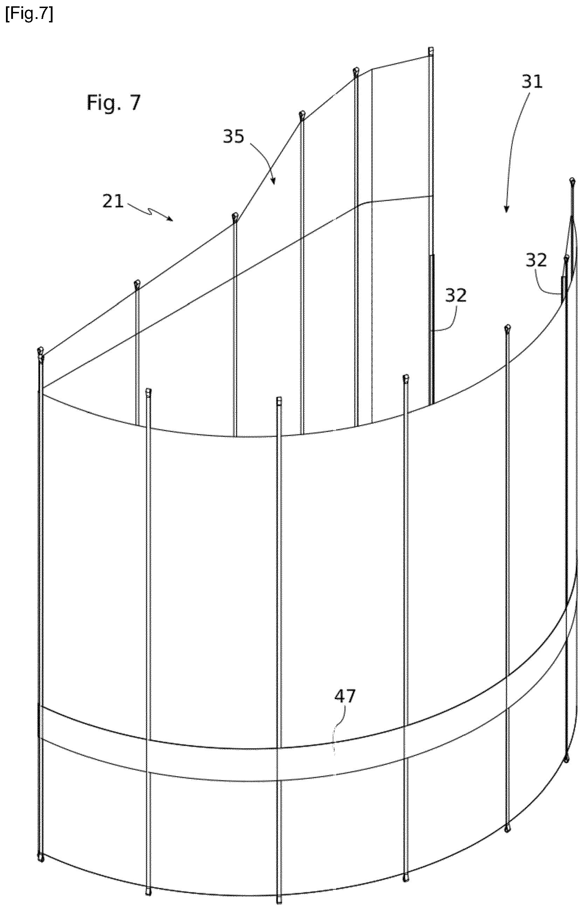

Dans le présent exemple, le système de traction comporte un réceptacle à voile 21 muni d'une ouverture supérieure 35 (voir figure 7). L'ouverture supérieure 35 est fixée par son pourtour sur les parois internes du goulot de stockage 17, de sorte que l'aile de traction 2 puisse être rangée dans l'espace interne de stockage 20, à l'intérieur du réceptacle à voile 21, après une phase de repli.

La plateforme de base 8, le mât d'arrimage 7, le goulot de stockage 17, et le réceptacle à voile 21 forment un ensemble d'éléments solidaires en rotation. Cet ensemble tourne conjointement avec la plateforme de base lors de sa rotation sur le socle 12.

La figure 5 est une vue agrandie montrant le dessus de la plateforme de base 8.

Le jambage de maintien 16 relie le mât d'arrimage 7 à la plateforme de base 8 en passant par-dessus la fenêtre de stockage 45.

Dans cet exemple de système de traction à double aile de traction, le jambage de maintien 16 divise l'espace de la plateforme de base 8 en deux parties symétriques comportant de part et d'autre les mêmes éléments. L'espace interne de stockage 20 du socle 12 comporte ainsi deux réceptacles à voile 21 présentant chacun une forme de demi-cylindre inséré dans l'espace interne de stockage 20 du socle 12.

Le couvercle 18 comporte deux demi-couvercles rotatifs permettant d'ouvrir le goulot de stockage 17 de part et d'autre d'un diamètre. La première aile de traction est ainsi stockée en passant par une moitié du goulot de stockage 17, d'un côté du jambage de maintien 16, et l'autre aile de traction 2 est stockée en passant par l'autre moitié du goulot de stockage 17, de l'autre côté du jambage de maintien 16.

Au-delà de l'exemple ici décrit, le système de traction selon l'invention peut bien entendu ne comporter qu'une seule aile de traction.

Pour chacune des ailes de traction, le système comporte une barrière 22 qui est formée ici de tubes soudés. Chaque barrière 22 s'étend autour du demi-goulot de stockage 17 correspondant à une aile de traction en l'entourant et en définissant une forme évasée formant un entonnoir. Un textile 23, ou un filet, (voir figure 2) est tendu entre les tubes formant la barrière 22, de sorte à former un entonnoir adapté à guider l'aile de traction en cours de repli vers le goulot de stockage 17, en préservant la toile de l'aile de traction 2 de tout dommage.

La barrière 22 est également rattachée au jambage de maintien 16.

Par ailleurs, la barrière 22 comporte de plus un bec de guidage 24 (formé ici également par des tubes mis en forme) disposé à l'aplomb du support 10 correspondant, et orienté vers ce dernier. Ce bec de guidage 24 remplit une fonction de rebord de maintien destiné à canaliser et maintenir l'ensemble des lignes de suspente 4 lorsque l'aile de traction 2 est stockée à l'intérieur du socle 12.

La figure 6 est une vue en perspective du goulot de stockage 17 seul et de la barrière 22 d'une seule aile de traction.

Le réceptacle à voile 21 est rattaché au goulot de stockage 17 par son ouverture supérieure 35 dont le pourtour est rattaché par des sangles 25 aux parois internes du goulot de stockage 17. Le goulot de stockage 17 comporte de plus des poutres 26, ou tout autre élément de paroi, divisant diamétralement le goulot de stockage 17 en deux, et permettant également le rattachement des sangles 25.

Sur la figure 6, le couvercle 18 est ouvert. L'un des demi-couvercles le constituant a pivoté sous l'autre demi-couvercle. Ces demi-couvercles sont montés rotatifs sur un arbre central 27, à deux hauteurs différentes sur cet arbre central 27, de sorte que chaque demi-couvercle puisse s'escamoter en passant par-dessous ou par-dessus l'autre demi-couvercle, de manière à donner accès à l'un ou l'autre des réceptacles à voile 21 (sur la figure 6, seul un réceptacle à voile 21 a été représenté).

Les deux demi-couvercles constituant le couvercle 18 comportent de plus chacun une entaille 28 permettant le passage du mât d'arrimage 7. Le couvercle 18 se referme ainsi contre le mât d'arrimage 7. Un joint d'étanchéité (ou autre moyen de même fonction) peut être prévu au niveau du contact entre le couvercle 18 et le mât d'arrimage 7, pour empêcher les entrées d'eau vers l'espace interne de stockage 20.

Les tubes de la barrière 22 forment de plus un chemin de guidage 29 vers le goulot de stockage 17. Le chemin de guidage 29 s'étend entre le bec de guidage 24 et une échancrure 30 ménagée dans la paroi du goulot de stockage 17.

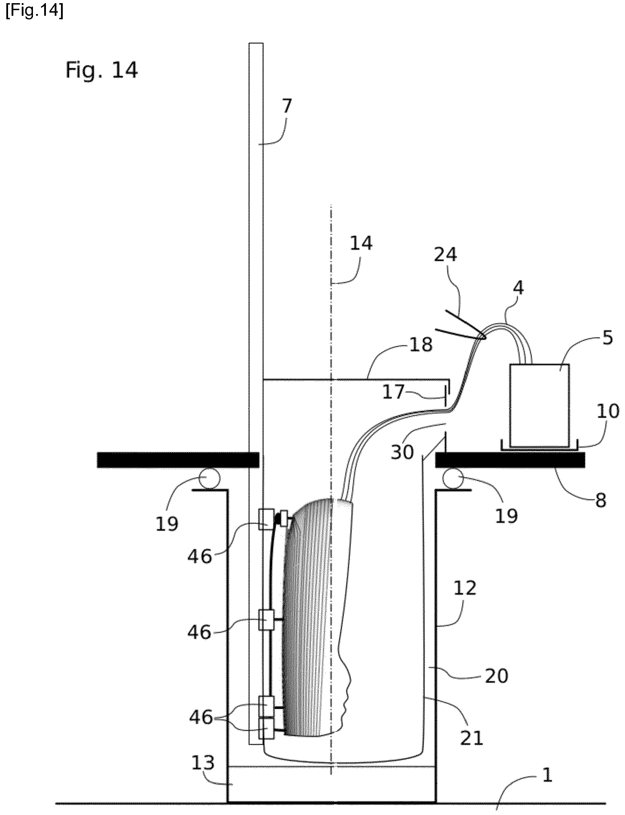

Lorsqu'une aile de traction 2 est stockée à l'intérieur du socle 12 et que le couvercle 18 est refermé, les lignes de suspente 4 sortent de l'espace interne de stockage 20 par l'échancrure 30, puis sont maintenues par le bec de guidage 24 et viennent ensuite rejoindre le dispositif volant de commande de trajectoire 5 qui est fixé sur son support 10 (voir figure 14, qui est une vue similaire à la figure 5, avec l'aile de traction 2 en position de stockage).

La figure 7 illustre l'un des réceptacles à voile 21 seul. Le réceptacle à voile 21 est ici réalisé par un sac à voile en un matériau souple adapté à contenir l'aile de traction sans l'endommager. De préférence, le réceptacle à voile peut être constitué, en partie ou en totalité, d'un textile perforé (un filet, par exemple), pour laisser passer l'air afin de permettre un séchage de l'aile de traction 2 après son rangement. En variante, le réceptacle à voile 21 peut être constitué d'une poche de matériau étanche, plus ou moins souple, ou par un compartiment rigide, réalisé par exemple par un matériau composite.

Par ailleurs, l'espace interne de stockage 20 peut comporter de plus un dispositif d'aération ou d'extraction d'air, afin de favoriser encore le séchage de l'aile de traction 2.

Le réceptacle à voile 21 comporte un renfort de friction 47 destiné à le prémunir du frottement contre les parois internes de l'espace interne de stockage 20, lorsque la plateforme de base 8 tourne par rapport au socle 12.

Le réceptacle à voile 21 comporte de plus une ouverture latérale 31 permettant à l'aile de traction 2, lors de sa phase de repli, d'être guidée le long du mât d'arrimage 7 jusqu'à l'intérieur du réceptacle à voile 21. Le mât d'arrimage 7 est fixé sur la plateforme de base 8 et s'étend en dessous de cette plateforme de base 8 de manière à être disposé en vis-à-vis de cette ouverture latérale 31. L'ouverture latérale 31 donne ainsi accès à la structure de déploiement et de repli.

Le réceptacle à voile 21 comporte, sur les rebords de l'ouverture latérale 31, des ralingues 32 permettant de rattacher le réceptacle à voile 21 sur le mât d'arrimage 7 ou sur des éléments (de capotage, par exemple) liés au mât d'arrimage 7. Les ralingues 32 sont insérées dans des profilés correspondants disposés le long du mat d'arrimage 7 (ou de tout autre élément lié au mat d'arrimage 7).

Lors de la rotation de la plateforme de base 8 sur le socle 12, le réceptacle à voile 21 est maintenu le long du mât d'arrimage 7, entrainé en rotation mais sans interférer avec la rotation du mât d'arrimage 7. De plus, les éléments tels que les charriots 46 de maniement des lignes de l'aile de traction 2 peuvent coulisser librement le long du mât d'arrimage 7 pour venir déposer la voile dans le réceptacle à voile 21, en passant dans l'ouverture latérale 31, entre les deux ralingues 32.

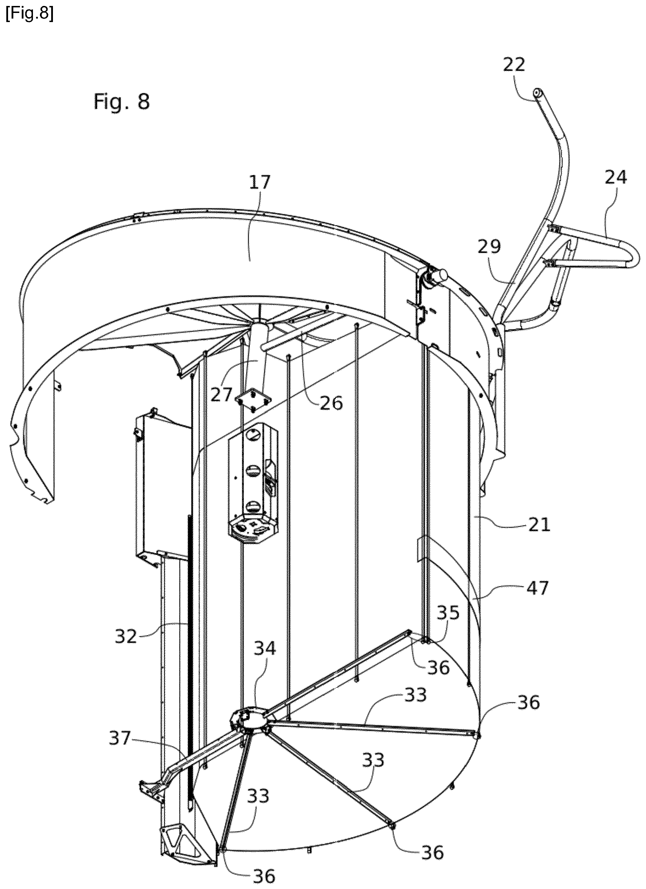

La figure 8 est une vue similaire à la figure 6, en vue de dessous.

Le dessous du réceptacle à voile 21 est entrainé en rotation conjointement au reste du réceptacle à voile 21 pour éviter tout phénomène de vrillage du réceptacle à voile 21, lors de la rotation de la plateforme de base 8.

Le dessous du réceptacle à voile 21 est ainsi relié à des moyens d'entrainement en rotation comportant ici des barres 33 fixées à un anneau central 34 et reliées à des boucles 36 au niveau du rebord inférieur du réceptacle à voile 21. L'anneau central 34 est rigidement relié, par un bras principal 37, au mât d'arrimage 7 (ou à tout autre élément solidaire de la plateforme de base 8). L'ensemble peut optionnellement être rigidifié en reliant les barres 33 entre elles par des câbles.

Lors de l'entrainement en rotation de la plateforme 8, le goulot de stockage 17 entraine en rotation la partie supérieure du réceptacle à voile 21, et les barres 33 entrainent en rotation sa partie inférieure, le tout conjointement avec la plateforme de base 8 et le mât d'arrimage 7.

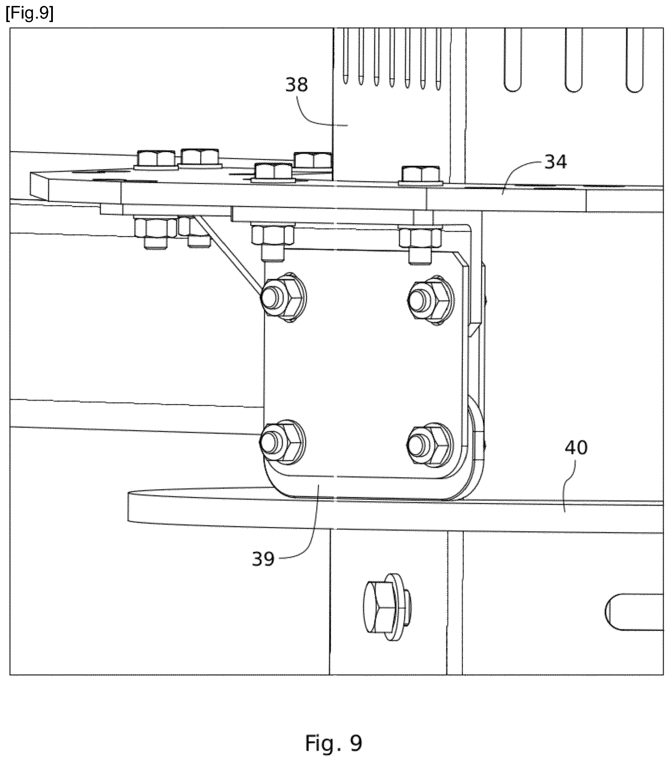

La figure 9 illustre un exemple de réalisation du montage de l'anneau central 34. L'anneau central 34 est disposé autour d'une poutre centrale 38 solidaire du socle 12, et repose par des patins de glissement 39 sur une collerette 40 solidaire de la poutre centrale 38. Une liaison pivot est ainsi réalisée entre l'anneau central 34 (et donc les barres 33) et le socle 12.

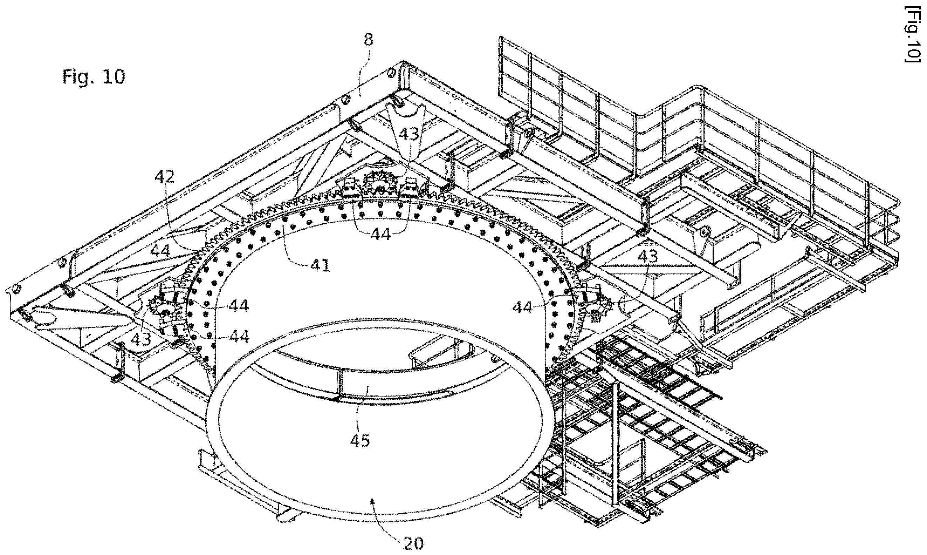

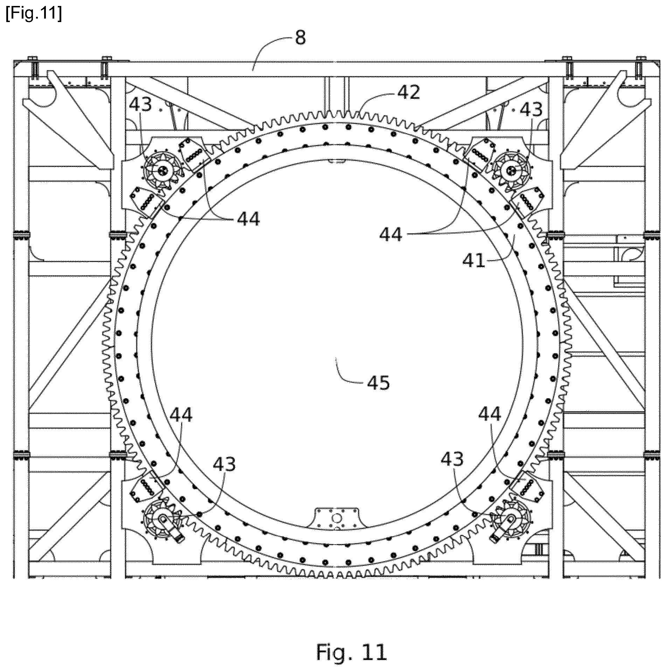

Les figures 10 et 11 illustrent un exemple de réalisation de la liaison pivot entre la plateforme de base 8 et le socle 12, et de la motorisation de cette rotation.

Sur la figure 10, le socle 12 a été représenté dépourvu de son embase de fixation 13, l'espace interne de stockage étant ainsi visible (l'embase de fixation 13 et le reste du socle 12 peuvent être boulonnés, soudés, etc.).

Le socle 12 comporte une collerette supérieure 41 s'étendant sur la périphérie du fût constituant le socle 12. Une couronne dentée 42 est fixée (ici par boulonnage) sur cette collerette supérieure 41, et l'ensemble est relié à la plateforme de base 8 avec un moyen de glissement ou de rotation.

La figure 11 est une vue de dessous des éléments de la figure 10.

Dans le présent exemple, la plateforme de base comporte quatre pignons 43 engrenant sur la couronne dentée 42 et motorisés conjointement pour commander la rotation de la plateforme de base 8 sur le socle 12. Les moteurs actionnant les pignons 43 sont montés sur la plateforme de base 8.

Des patins de rétention 44, montés sur la plateforme de base 8, permettent de retenir la plateforme de base 8 contre la couronne dentée 42.

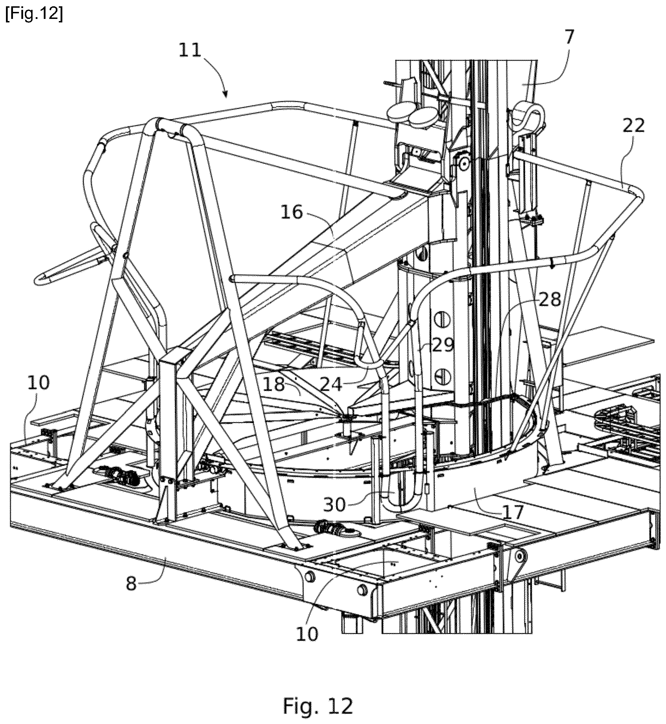

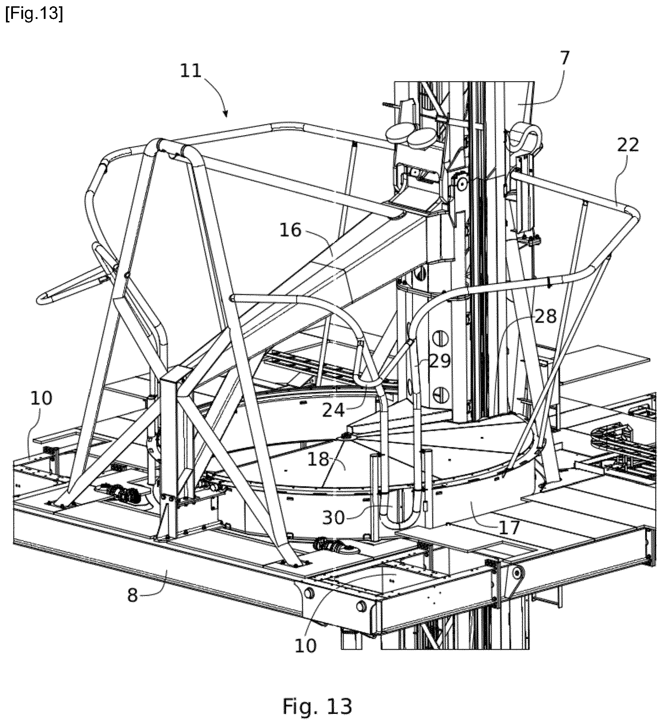

Les figures 12 et 13 illustrent des séquences d'actionnement du couvercle 18. La motorisation du couvercle 18 peut être réalisée par tout moyen approprié. Dans le présent exemple, cette motorisation ne nécessite qu'un moteur, qui entraine en rotation un seul demi-couvercles (le couvercle 18 étant constitué de deux demi-couvercles). Des moyens de couplage en rotation des deux demi-couvercles sont de plus prévus de sorte que le demi-couvercle motorisé peut entrainer le demi-couvercle passif.

La figure 12 illustre l'ouverture du couvercle 18, le demi-couvercle de droite étant ouvert. L'aile de traction située du côté droit sur la figure peut ainsi être déployée ou repliée.

Seul ce demi-couvercle droit est motorisé. Si l'on souhaite ouvrir le demi-couvercle gauche, à partir de la position de la figure 12, un moyen de couplage en rotation des deux demi-couvercles est activé (par exemple, un loquet électromagnétique).

Le demi-couvercle droit est ensuite activé à nouveau en rotation pour revenir à sa position initiale sur la partie droite, entrainant avec lui la rotation du deuxième demi-couvercle de la partie gauche, conduisant à la position d'ouverture de la figure 13.

La motorisation des deux demi-couvercles peut ainsi être réalisée par un seul système de motorisation. En variante, chaque demi-couvercle peut comporter sa propre motorisation indépendante.

La figure 14 illustre le procédé de repli de l'aile de traction 2 et représente l'étape finale du repli.

Le procédé de repli du système de traction est mis en œuvre par les opérations suivantes :
- à partir de la position de vol de la figure 1, l'aile de traction 2 est ramenée par le treuil 9 jusqu'à proximité du mât d'arrimage 7 ;
- la plateforme de base 8 est entrainée en rotation sur le socle 12 de sorte que le mât d'arrimage 7 soit angulairement orienté pour être positionné face au vent apparent ;
- le bord d'attaque 3 de l'aile de traction 2 est arrimé (par une ligne d'arrimage dédiée, ou par tout autre moyen connu) contre le mât d'arrimage 7 ;
- des charriots 46 saisissent diverses lignes de l'aile de traction 2 et viennent replier l'aile de traction 2 le long du mât d'arrimage 7 ;
- le couvercle 18 est ouvert ;
- les charriots 46 descendent ensuite le long du mât d'arrimage 7, traversent le goulot de stockage 17 et la fenêtre de stockage 45 jusqu'à venir placer l'aile de traction 2 à l'intérieur du réceptacle à voile 21 (l'entonnoir de guidage 11 canalisant l'aile de traction vers le goulot de stockage 17) ;
- le couvercle 18 est refermé.

L'aile de traction 2 est ainsi stockée de manière ordonnée, en sécurité, à l'intérieur du réceptacle à voile 21 de manière entièrement automatisée et reste maintenue par les charriots 46. Durant ces opérations de repli, les lignes de suspente 4 de l'aile de traction 2 sont guidées dans leur parcours entre l'aile de traction 2 stockée et le dispositif volant de commande de trajectoire 5 posé sur son support 10, également de manière automatisée.

Lors des phases de déploiement de l'aile de traction 2, ces opérations sont répétées dans l'ordre inverse, l'aile étant alors sortie du réceptacle à voile 21 par le coulissement des charriots le long du mât d'arrimage 7 vers le haut, et la plateforme de base 8 étant entrainée en rotation pour que le mât d'arrimage 7 soit angulairement disposé face au vent apparent, pour ensuite permettre l'envol de l'aile de traction 2 (voir figure 2).

Des variantes de réalisation du système de traction peuvent être mises en œuvre. Notamment, la structure de déploiement et de repli peut comporter des éléments supplémentaires ou alternatifs au mât d'arrimage 7, tels que structures déployables ou pliables, etc.

Par ailleurs, la plateforme de base 8 peut être dépourvue de réceptacle à voile 21, la voile étant alors stockée directement dans l'espace interne de stockage 20 sans réceptacle, en étant maintenue uniquement par les charriots 46. Dans ce cas, les parois internes du socle 12 sont de préférences dépourvues d'aspérité et peuvent comporter des aménagements (revêtements, etc.) préservant l'aile de traction en cas de friction sur les parois internes du socle 12, lors de la rotation de la plateforme 8 sur le socle 12.

## Revendications

1. Système de traction à aile captive, comportant :
- une aile de traction (2) adaptée à générer une force de traction sous l'effet du vent ;
- un dispositif volant de commande de trajectoire (5) rattaché à l'aile de traction (2) par des lignes de suspente (4) ;
- une plateforme de base (8) sur laquelle est montée une structure de déploiement et de repli de l'aile de traction (2) ;
- une ligne de traction (6) reliant le dispositif volant de commande de trajectoire (5) à la plateforme de base (8) ;
ce système de traction à aile captive étant **caractérisé en ce que** :
- il comporte un socle (12) qui comprend une embase de fixation (13) sur un support de traction, ce socle (12) comprenant de plus un espace interne de stockage (20) pour l'aile de traction (2) ;
- la plateforme de base (8) est montée rotative sur le socle (12) selon une liaison pivot ;
- la plateforme de base (8) comporte une fenêtre de stockage (45) débouchant dans l'espace interne de stockage (20), cette fenêtre de stockage (45) étant située au pied de la structure de déploiement et de repli.

2. Système de traction selon la revendication 1, **caractérisé en ce que** la plateforme de base (8) comporte un support (10) pour le dispositif volant de commande de trajectoire (5), ce support (10) étant disposé à la périphérie de la fenêtre de stockage (45).

3. Système de traction selon l'une des revendications précédentes, **caractérisé en ce qu'**il comporte un treuil (9) adapté à enrouler ou relâcher la ligne de traction (6), ce treuil (9) étant monté sur la plateforme de base (8).

4. Système de traction selon l'une des revendications précédentes, **caractérisé en ce qu'**il comporte un goulot de stockage (17) formé d'une portion de cylindre donnant accès à la fenêtre de stockage (45), ce cylindre étant fixé sur la plateforme de base (8).

5. Système de traction selon l'une des revendications précédentes, **caractérisé en ce que** qu'il comporte un entonnoir de guidage (11) en direction de la fenêtre de stockage (45), pour le repli de l'aile de traction (2).

6. Système de traction selon la revendication 5, **caractérisé en ce que** l'entonnoir de guidage (11) comporte un bec de guidage (24) pour le guidage des lignes de suspente (4) de l'aile de traction (2).

7. Système de traction selon l'une des revendications 4 à 6, **caractérisé en ce que** le goulot de stockage (17) comporte une échancrure (30) de passage des lignes de suspente (4) de l'aile de traction (2).

8. Système de traction selon l'une des revendications 4 à 7, **caractérisé en ce qu'**il comporte un couvercle (18) de fermeture du goulot de stockage (17).

9. Système de traction selon l'une des revendications précédentes, **caractérisé en ce que** la structure de déploiement et de repli traverse la fenêtre de stockage (45).

10. Système de traction selon la revendication 9 lorsqu'elle dépend de la revendication 8, **caractérisé en ce que** le couvercle comporte une entaille (28) de passage de la structure de déploiement et de repli.

11. Système de traction selon l'une des revendications précédentes, **caractérisé en ce qu'**il comporte un réceptacle à voile (21) qui est rattaché à la plateforme de base (8) et qui est disposé dans l'espace interne de stockage (20).

12. Système de traction selon la revendication 11 lorsqu'elle dépend de la revendication 4, **caractérisé en ce que** le réceptacle à voile (21) comporte une ouverture supérieure (35) fixée par son pourtour sur les parois internes du goulot de stockage (17).

13. Système de traction selon l'une des revendications 11 ou 12, **caractérisé en ce qu'**il comporte des moyens d'entrainement en rotation d'une partie inférieure du réceptacle à voile (21).

14. Système de traction selon l'une des revendications 11 à 13, **caractérisé en ce que** le réceptacle à voile (21) comporte une ouverture latérale (31) d'accès à la structure de déploiement et de repli.

15. Système de traction selon l'une des revendications précédentes, **caractérisé en ce qu'**il comporte un dispositif de motorisation de la rotation de la plateforme de base (8) sur le socle (12), ce dispositif comportant une couronne dentée (42) sur laquelle engrène au moins un pignon (43).

16. Système de traction selon l'une des revendications précédentes, **caractérisé en ce qu'**il comporte des patins de rétention (44) de la plateforme de base (8) contre le socle (12).

17. Système de traction selon l'une des revendications précédentes, **caractérisé en ce qu'**il comporte un jambage de maintien (16) reliant la structure de déploiement et de repli à la plateforme de base (8), par-dessus la fenêtre de stockage (45).

18. Système de traction selon la revendication 17 lorsqu'elle dépend de la revendication 5, **caractérisé en ce que** l'entonnoir de guidage (11) est formé d'au moins une barrière (22) rattachée au jambage de maintien (16).

19. Système de traction selon l'une des revendications précédentes, **caractérisé en ce que** la structure de déploiement et de repli comporte un mât d'arrimage (7) fixé sur la plateforme de base (8) et adapté à arrimer l'aile de traction (2) par son bord d'attaque.

20. Système de traction selon la revendication 19, **caractérisé en ce que** la structure de déploiement et de repli comporte des charriots (46) de manipulation des lignes de suspente (4), ces charriots (46) étant adaptés à coulisser le long du mât d'arrimage jusque dans l'espace interne de stockage (20).

21. Procédé de déploiement ou de repli d'une aile de traction d'un système de traction selon l'une des revendications précédentes, **caractérisé en ce qu'**il comporte une étape de rotation de la plateforme de base (8) sur le socle (12), pour orienter le dispositif de déploiement ou de repli par rapport au vent.

22. Procédé de repli d'une aile de traction selon la revendication rsqu'elle est dépendante de la revendication 20 **caractérisé en ce qu'**il comporte les étapes suivantes :
- les charriots (46) saisissent l'aile de traction (2) par ses lignes de suspente (4);
- les charriots (46) descendent le long de la structure de déploiement et de repli jusque dans l'espace interne de stockage (20).

## Patentansprüche

1. Zugsystem mit Fangflügel, umfassend:
- einen Zugflügel (2), der dazu ausgelegt ist, unter der Einwirkung des Windes eine Zugkraft zu erzeugen;
- eine fliegende Streckensteuerungsvorrichtung (5), die über Tragseile (4) mit dem Zugflügel (2) verbunden ist;
- eine Grundplattform (8), an der eine Struktur zum Entfalten und zum Falten des Zugflügels (2) angebracht ist;
- ein Zugseil (6), das die fliegende Streckensteuerungsvorrichtung (5) mit der Grundplattform (8) verbindet;
wobei das Fangflügelzugsystem **dadurch gekennzeichnet ist, dass**:
- es einen Sockel (12) aufweist, der eine Befestigungsbasis (13) auf einem Zugträger umfasst, wobei der Sockel (12) außerdem einen inneren Lagerraum (20) für den Zugflügel (2) umfasst;
- die Grundplattform (8) mittels einer Schwenkverbindung drehbar am Sockel (12) montiert ist;
- die Grundplattform (8) ein Lagerfenster (45) aufweist, das in den inneren Lagerraum (20) mündet, wobei sich das Lagerfenster (45) am Fuß der Entfaltungs- und Faltungsstruktur befindet.

2. Zugsystem nach Anspruch 1, **dadurch gekennzeichnet, dass** die Grundplattform (8) einen Träger (10) für die fliegende Streckensteuerungsvorrichtung (5) aufweist, wobei der Träger (10) am Rand des Lagerfensters (45) angeordnet ist.

3. Zugsystem nach einem der vorangehenden Ansprüche, **dadurch gekennzeichnet, dass** es eine Winde (9) aufweist, die dazu ausgelegt ist, das Zugseil (6) auf- oder abzuwickeln, wobei die Winde (9) auf der Grundplattform (8) montiert ist.

4. Zugsystem nach einem der vorangehenden Ansprüche, **dadurch gekennzeichnet, dass** es einen Lagerstutzen (17) aufweist, der aus einem Zylinderabschnitt ausgebildet ist, der den Zugang zum Lagerfenster (45) gewährt, wobei der Zylinder auf der Grundplattform (8) befestigt ist.

5. Zugsystem nach einem der vorangehenden Ansprüche, **dadurch gekennzeichnet, dass** es einen Führungstrichter (11) in Richtung des Lagerfensters (45) zum Falten des Zugflügels (2) aufweist.

6. Zugsystem nach Anspruch 5, **dadurch gekennzeichnet, dass** der Führungstrichter (11) eine Führungstülle (24) zum Führen der Tragseile (4) des Zugflügels (2) aufweist.

7. Zugsystem nach einem der Ansprüche 4 à 6, **dadurch gekennzeichnet, dass** der Lagerstutzen (17) eine Aussparung (30) für die Durchführung der Tragseile (4) des Zugflügels (2) aufweist.

8. Zugsystem nach einem der Ansprüche 4 bis 7, **dadurch gekennzeichnet, dass** es eine Abdeckung (18) zum Verschließen des Lagerstutzens (17) aufweist.

9. Zugsystem nach einem der vorangehenden Ansprüche, **dadurch gekennzeichnet, dass** die Entfaltungs- und Faltungsstruktur das Lagerfenster (45) durchquert.

10. Zugsystem nach Anspruch 9, soweit rückbezogen auf Anspruch 8, **dadurch gekennzeichnet, dass** der Deckel eine Kerbe (28) für die Durchführung der Entfaltungs- und Faltungsstruktur aufweist.

11. Zugsystem nach einem der vorangehenden Ansprüche, **dadurch gekennzeichnet, dass** es einen Segelbehälter (21) aufweist, der mit der Grundplattform (8) verbunden und im inneren Lagerraum (20) angeordnet ist.

12. Zugsystem nach Anspruch 11 soweit rückbezogen auf Anspruch 4, **dadurch gekennzeichnet, dass** der Segelbehälter (21) eine obere Öffnung (35) aufweist, die mit ihrem Umfang an den Innenwänden des Lagerstutzens (17) befestigt ist.

13. Zugsystem nach einem der Ansprüche 11 oder 12, **dadurch gekennzeichnet, dass** es Mittel zum Drehantrieb eines unteren Teils des Segelbehälters (21) aufweist.

14. Zugsystem nach einem der Ansprüche 11 bis 13, **dadurch gekennzeichnet, dass** der Segelbehälter (21) eine seitliche Öffnung (31) für den Zugang zur Entfaltungs- und Faltungsstruktur aufweist.

15. Zugsystem nach einem der vorangehenden Ansprüche, **dadurch gekennzeichnet, dass** es eine Vorrichtung zur Motorisierung der Drehung der Grundplattform (8) auf dem Sockel (12) aufweist, wobei die Vorrichtung einen Zahnkranz (42) aufweist, mit dem mindestens ein Zahnrad (43) in Eingriff steht.

16. Zugsystem nach einem der vorangehenden Ansprüche, **dadurch gekennzeichnet, dass** es Kufen (44) zum Halten der Grundplattform (8) gegen den Sockel (12) aufweist.

17. Zugsystem nach einem der vorangehenden Ansprüche, **dadurch gekennzeichnet, dass** es einen Haltepfosten (16) aufweist, der die Entfaltungs- und Faltungsstruktur über das Lagerfenster (45) mit der Grundplattform (8) verbindet.

18. Zugsystem nach Anspruch 17, soweit rückbezogen auf Anspruch 5, **dadurch gekennzeichnet, dass** der Führungstrichter (11) aus mindestens einer mit dem Haltepfosten (16) verbundenen Barriere (22) ausgebildet ist.

19. Zugsystem nach einem der vorangehenden Ansprüche, **dadurch gekennzeichnet, dass** die Entfaltungs- und Faltungsstruktur einen Sicherungsmast (7) aufweist, der an der Grundplattform (8) befestigt und dazu ausgelegt ist, den Zugflügel (2) an seiner Vorderkante zu sichern.

20. Zugsystem nach Anspruch 19, **dadurch gekennzeichnet, dass** die Entfaltungs- und Faltungsstruktur Schlitten (46) zum Handhaben der Tragseile (4) aufweist, wobei die Schlitten (46) dazu ausgelegt sind, entlang des Sicherungsmasts bis in den inneren Lagerraum (20) zu gleiten.

21. Verfahren zum Entfalten oder Falten eines Zugflügels eines Zugsystems nach einem der vorangehenden Ansprüche, **dadurch gekennzeichnet, dass** es einen Schritt des Drehens der Grundplattform (8) auf dem Sockel (12) aufweist, um die Entfaltungs- bzw. Faltungsvorrichtung in Bezug auf den Wind auszurichten.

22. Verfahren zum Falten eines Zugflügels nach Anspruch 21, soweit rückbezogen auf Anspruch 20, **dadurch gekennzeichnet, dass** es die folgenden Schritte umfasst:
- die Schlitten (46) erfassen den Zugflügel (2) an seinen Tragseilen (4);
- die Schlitten (46) bewegen sich entlang der Entfaltungs- und Faltungsstruktur bis in den inneren Lagerraum (20).

## Claims

1. A tethered wing traction system including:
- a traction wing (2) adapted to generate a traction force because of the effect of the wind;
- a flying trajectory control device (5) attached to the traction wing (2) by suspension lines (4);
- a base platform (8) on which is mounted a structure for deploying and retracting the traction wing (2);
- a traction line (6) connecting the flying trajectory control device (5) to the base platform (8); this tethered wing traction system being **characterized in that**:
- it includes a stand (12) which comprises a fixing base (13) on a traction support, this stand (12) further including an internal storage space (20) for the traction wing (2);
- the base platform (8) is mounted to rotate on the stand (12) by means of a pivot connection;
- the base platform (8) includes a storage window (45) opening into the internal storage space (20), this storage window (45) being situated at the base of the deployment and retraction structure.

2. The traction system as claimed in claim 1 **characterized in that** the base platform (8) includes a support (10) for the flying trajectory control device (5), this support (10) being arranged at the periphery of the storage window (45).

3. The traction system as claimed in either one of the preceding claims **characterized in that** it includes a winch (9) adapted to wind in or to release the traction line (6), this winch (9) being mounted on the base platform (8).

4. The traction system as claimed in any one of the preceding claims **characterized in that** it includes a storage neck (17) formed of a cylinder portion providing access to the storage window (45), this cylinder being fixed to the base platform (8).

5. The traction system as claimed in any one of the preceding claims **characterized in that** it includes a guide funnel (11) for folding the traction wing (2) extending in the direction of the storage window (45).

6. The traction system as claimed in claim 5 **characterized in that** the guide funnel (11) includes a guide hook (24) for guiding the suspension lines (4) of the traction wing (2).

7. The traction system as claimed in any one of claims 4 to 6 **characterized in that** the storage neck (17) includes a notch (30) through which the suspension lines (4) of the traction wing (2) pass.

8. The traction system as claimed in any one of claims 4 to 7 **characterized in that** it includes a cover (18) for closing the storage neck (17).

9. The traction system as claimed in any one of the preceding claims **characterized in that** the deployment and retraction structure passes through the storage window (45).

10. The traction system as claimed in claim 9 when dependent on claim 8 **characterized in that** the cover includes a cut-out (28) through which the deployment and retraction structure passes.

11. The traction system as claimed in any one of the preceding claims **characterized in that** it includes a wing receptacle (21) that is attached to the base platform (8) and arranged in the internal storage space (20).

12. The traction system as claimed in claim 11 when dependent on claim 4 **characterized in that** the wing receptacle (21) includes an upper opening (35) fixed by its perimeter to the internal walls of the storage neck (17).

13. The traction system as claimed in either one of claims 11 or 12 **characterized in that** it includes means for driving in rotation a lower part of the wing receptacle (21).

14. The traction system as claimed in any one of claims 11 to 13 **characterized in that** the wing receptacle (21) includes a lateral opening (31) for access to the deployment and retraction structure.

15. The traction system as claimed in any one of the preceding claims **characterized in that** it includes a device for driving rotation of the base platform (8) on the stand (12) including a toothed ring (42) with which at least one gear (43) meshes.

16. The traction system as claimed in any one of the preceding claims **characterized in that** it includes retaining blocks (44) for holding the base platform (8) against the stand (12).

17. The traction system as claimed in any one of the preceding claims **characterized in that** it includes a retaining leg structure (16) connecting the deployment and retraction structure to the base platform (8) over the storage window (45).

18. The traction system as claimed in claim 17 when dependent on claim 5 **characterized in that** the guide funnel (11) is formed of at least one barrier (22) attached to the retaining leg structure (16).

19. The traction system as claimed in any one of the preceding claims **characterized in that** the deployment and retraction structure includes a mooring mast (7) fixed to the base platform (8) and adapted to moor the traction wing (2) by its leading edge.

20. The traction system as claimed in claim 19 **characterized in that** the deployment and retraction structure includes carriages (46) for manipulating the suspension lines (4), said carriages (46) being adapted to slide along the mooring mast into the internal storage space (20).

21. A method for deployment or retraction of a traction wing of a traction system as claimed in any one of the preceding claims **characterized in that** it includes a step of rotating the base platform (8) on the stand (12) to orient the deployment or retraction device relative to the wind.

22. A method of folding a traction wing as claimed in claim 21, when it depends on claim 20 **characterized in that** it includes the following steps:
- the carriages (46) catch the traction wing (2) by its suspension lines (4);
- the carriages (46) descend along the deployment and retraction structure into the internal storage space (20).
